Europäisches Patentamt

European Patent Office

Office européen des brevets

(19)

(11) Veröffentlichungsnummer: **0 217 331**
**B1**

(12) **EUROPÄISCHE PATENTSCHRIFT**

(45) Veröffentlichungstag der Patentschrift: **27.06.90**

(51) Int. Cl.⁵: **C 21 B 13/14**

(21) Anmeldenummer: **86113354.4**

(22) Anmeldetag: **29.09.86**

(54) **Verfahren zur Herstellung von Roheisen aus Feinerz.**

(30) Priorität: **03.10.85 DE 3535572**

(43) Veröffentlichungstag der Anmeldung:
**08.04.87 Patentblatt 87/15**

(45) Bekanntmachung des Hinweises auf die
Patenterteilung:
**27.06.90 Patentblatt 90/26**

(84) Benannte Vertragsstaaten:
**AT BE DE FR GB IT LU NL SE**

(56) Entgegenhaltungen:
EP-A-0 063 924
BE-A- 891 280
DE-B-1 222 952
GB-A-2 077 766

STAHL UND EISEN, Band 102, Nr. 19, 20.
September 1982, Seiten 927-928, Düsseldorf,
DE; "Das Kohlereduktionsverfahren (KR-
Verfahren) zur Roheisenerzeugung aus Erz und
Rohkohle"

(73) Patentinhaber: **DEUTSCHE VOEST-ALPINE
INDUSTRIEANLAGENBAU GMBH
Neusser Strasse 111
D-4000 Düsseldorf 1 (DE)**

(72) Erfinder: **Hauk, Rolf, Dr.
Ratskellerstrasse 12
D-7590 Achern (DE)**

(74) Vertreter: **Pfenning, Meinig & Partner
Mozartstrasse 17
D-8000 München 2 (DE)**

**Beschreibung**

Die Erfindung betrifft ein Verfahren nach dem Oberbegriff des Anspruchs 1.

Bei einem als Plasmamelt-Prozeß bekannten Verfahren zur Reduktion von Eisenerz finden eine Vorreduktion des Eisenerzes und eine anschließende Schmelzreduktion in einem Einschmelzvergaser statt. Die Vorreduktion erfolgt mit Hilfe des im Einschmelzvergaser erzeugten Gases. Der vorreduzierte Eisenschwamm wird in den unteren Abschnitt des Einschmelzvergasers über der Schlacken- und Schmelzherd eingegeben. In diesem Abschnitt sind auch ein oder mehrere Plasmabrenner wirksam, die zumindest einen Teil der zum Schmelzen des Eisenschwamms erforderlichen Wärme aufbringen. Über die Plasmebrenner wird weiterhin Kohlestaub in den Einschmelzvergaser eingeführt, der als Reduktionsmittel für den Eisenschwamm dient. Von oben wird Koks in den Einschmelzvergaser eingegeben, der ein festes, gas- und flüssigkeitsdurchlässiges Bett bildet, in dem die Reduktion stattfindet. Unmittelbar nach der Einführung des Eisenschwamms in die Schmelz- und Reduktionszone des Einschmelzvergasers wird dieser geschmolzern und vollständig reduziert. Das flüssige Eisen und die Schlacke sammeln sich in dem hierfür vorgesehenen Herd am Boden des Einschmelzvergasers und werden in geeigneten Zeitabständen abgezogen. Dieses bekannte Verfahren ist insoweit Einschränkungen unterworfen, als die Kohle zu Staub vermahlen werden muß, bevor sie über die Plasmabrenner zugeführt werden kann, und als der Einsatz von relativ teurem Koks zur Herstellung und Aufrechterhaltung des Festbettes erforderlich ist.

Aus der EP 0 063 924 A2 ist ein Verfahren zur Reduktion und zum Schmelzen von Feinerz bekannt, bei dem ebenfalls eine Vorreduktion durchgeführt und das vorreduzierte Erz zusammen mit erhitzter Luft über Blasdüsen seitlich in den Einschmelzvergaser eingeführt werden. Von oben wird festes kohlenstoffhaltiges Material in den Einschmelzvergaser eingegeben, das ein Festbett in diesem bildet. Vor den Blasdüsen steigt die Temperatur auf etwa 2000 bis 2500°C und es bilden sich hier Hohlräume im Festbett, in denen das Eisenerz schmilzt und fertigreduziert wird. Hierfür wird jedoch eine erhebliche Wärmemenge benötigt, so daß die zugeführte Wärme oft nicht ausreicht, um das Erz vollständig zu schmelzen und zu reduzieren. Da das Erz nicht nur im unteren Abschnitt des Einschmelzvergasers, sondern auch und insbesondere in den mittleren Abschnitt eingeblasen in den mittleren Abschnitt eingeblasen und dort geschmolzen wird, muß der gesamte darunterliegende Teil des Einschmelzvergasers auf einer solchen Temperatur gehalten werden, daß das heruntertropfende geschmolzene Eisen nicht erstarrt. Auch insoweit bereitet es Schwindigkeiten, den entsprechenden Wärmebedarf zu decken. Die Wärmezuführung durch Plasmabrenner anstelle durch erhitzte Luft ist hierbei wesentlich vorteilhafter.

Ausgehend von dem bekannten Plasmamelt-Prozeß besteht somit die Aufgabe der vorliegenden Erfindung darin, dieses Verfahren so zu verbessern, daß es weder Koks noch aufgemahlen Kohle als Ausgangsmaterialien benötigt, sondern stattdessen mit Kohle jeder Art und Form betrieben werden kann.

Diese Aufgabe wird erfindungsgemäß durch die im kennzeichnenden Teil des Anspruchs 1 angegebenen Merkmale gelöst. Vorteilhafte Weiterbildungen des erfindungsgemäßen Erfahrens ergeben sich aus den Unteransprüchen.

Die Erfindung bezieht sich somit auf ein Verfahren zur Herstellung von Roheisen aus Feinerz, bei dem das Eisenerz in einem oder mehreren Reduktionsaggregaten vorreduziert und der hierbei entstandene Eisenschwamm anschließend in einem Einschmelzvergaser mit Hilfe mindestens eines Plasmabrenners und eines festen kohlenstoffhaltigen Reduktionsmittels aufgeschmolzen und fertigreduziert wird, wobei der Eisenschwamm in den unteren Abschnitt des Einschmelzvergasers im Bereich der Plasmabrenner oberhalb des Herdes eingegeben wird, und sie zeichnet sich dadurch aus, daß ein festes kohlenstoffhaltiges Material von oben in den Einschmelzvergaser eingeführt und in diesem eine Wirbelschicht aus Koks gebildet werden. Hierbei wird das Feste kohlenstoffhaltige Material vorzugsweise oberhalb der Wirbelschicht in Koks umgewandelt. Als festes kohlenstoffhaltiges Material kann vorteilhaft Kohle, insbesondere Gasflammkohle mit einer Korngröße bis 50 mm verwendet werden. Die Aufrechterhaltung der Wirbelschicht erfolgt zweckmäßig durch das hochstömende, über die Plasmabrenner zugeführte Gas und das bei der Fertigreduktion entstehende Gas. Zusätzlich kann Sauerstoff in den Einschmelzvergaser eingeleitet werden.

Vorzugsweise wird der Eisenschwamm über die Plasmabrenner selbst in den Einschmelzvergaser eingegeben, Dabei kann das im Einschmelzvergaser erzeugte Gas nach Abkühlung zum Transport des Eisenschwamms verwendet werden. Dieses kann weiterhin als Plasmagas für die Plasmabrenner benutzt werden. Diese Gas wird schließlich vorteilhaft auch nach Einstellung auf eine geeignete Temperatur zur Vorreduktion des Eisenerzes eingesetzt.

Aus dem beim vorliegenden Verfahren anfallenden Abgas wird vorzugsweise die hierfür benötigte elektrische Energie erzeugt. Der Metallisierungsgrad des vorreduzierten Eisenerzes soll zweckmäßig zwischen 30 und 70% liegen, wobei es empfehlenswert ist, diesen Metallisierungsgrad so zu wählen, daß die aus dem Abgas gewonnene elektrische Energie den gesamten Bedarf des Verfahrens deckt. Ein Teil des Abgases kann auch nach entsprechender Abkühlung als Plasmages für die Plasmabrenner verwendent werden.

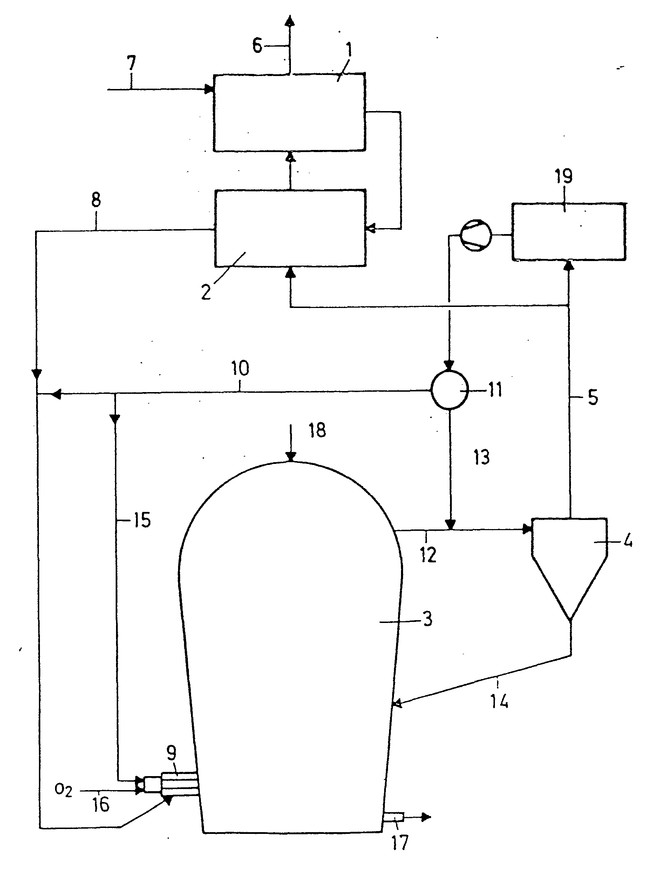

Die Erfindung wird im folgenden anhand eines in der Figur dargestellten Ausführungbeispiels näher erläutert. Diese zeigt in schematischer Darstellung eine Anlage zur Erzeugung von geschmolzenem Roheisen aus Feinerz.

Die dargestellte Anlage enthält als wesentliche Bestandteile zwei Vorrediktionsaggregate 1 und 2 sowie einen Einschmelzvergaser 3. Die Vorreduktion erfolgt mit Hilfe des in noch zu beschreibender Weise im Einschmelzvergaser 3 erzeugten, auf 850°C gekühlten und in einem Zyklon 4 gereinigten Gases. Über eine Leitung 5 strömt diese im wesentlichen CO und $H_2$ enthaltende Gas vom Zyklon 4 zunächst durch das Vorreduktionsaggregat 2 und dann durch das Vorreduktionsaggregat 1 und wird dann als Abgas über eine Leitung 6 abgenommen. Das Feinerz wird über eine Leitung 7 zugeführt und bewegt sich im Gegenstrom zu dem es reduzierenden Gas zunächst durch das Aggregat 1 und dann durch das Aggregat 2, um dann über eine Leitung 8 aus diesem abgeführt zu werden. Die Vorreduktion wird in Wirbelschichten, Reduktionszyklonen oder zirkulierenden Wirbelschichten durchgeführt.

Als Anströmböden der Wirbelschichten lassen sich vorteilhaft keramische Kugeln verwenden. Bei der Vorreduktion in den beiden Vorreduktionsaggregaten 1 und 2 erfolgt gleichzweitig eine Calcinierung der üblichen Zuschläge zum Eisenerz. Stattdessen kann auch eine gesonderte Wirbelschichtstufe vorgesehen sein, in der das Eisenerz vorgewärmt und die Zuschläge calziniert werden. Die hierfür benötigte Energie kann durch Teilverbrennung des hindurchgeführten Gases erzeugt werden.

Das vorreduzierte Feinerz bzw. der Eisenschwamm wird über die Leitung 8 zu im unteren Abschnitt des Einschmelzvergasers 3 vorgesehenen Plasmabrennern 9 geführt. Der Transport des Eisenschwamms erfolgt mit Hilfe eines über eine Leitung 10 in die Leitung 8 eingespeisten Gases. Die Leitung 10 ist an eine Sammelleitung 11 angeschlossen, in der sich aus dem Zyklon 4 herausgeführtes und anschließend im Wäscher 19 gekühltes Gas befindet. Das im Einschmelzvergaser 3 erzeugte Gas wird über eine Leitung 12 direkt in den Zyklon 4 geleitet, dort entstaubt und über die Leitung 5 als Reduktionsgas in die Vorreduktionsaggregate 1 und 2 geschickt. Da das Gas den Einschmelzvergaser 3 mit einer Temperatur von etwa 1000°C verläßt, die Vorreduktion jedoch vorzugsweise bei einer Temperatur von 850°C durchgeführt wird, wird über eine Leitung 13 kühleres aus dem Wäscher 19 stammendes Gas von der Sammelleitung 11 in die Leitung 12 eingespeist, so daß das in den Zyklon 4 gelangende Gas die gewünschte Temperatur von 850°C aufweist. Der im Zyklon 4 aus dem Gas abgeschiedene Staub wird über eine Leitung 14 und vorzugsweise die Plasmabrenner 9 wieder in dem Schmelz- und Reduktionsbereich des Einschmelzvergasers 3 zurückgeführt.

Die Plasmabrenner 9 sind in gleicher Höhe in gleichen Abständen über den Umfang des Einschmelzvergasers 3 verteilt. Es kann jedoch auch nur ein Plasmabrenner vorgesehen sein, wenn dieser eine ausreichende Wärmeenergie liefert. Als Plasmages wird ebenfalls gekühltes aus dem Wäscher 19 stammendes Gas verwendet, das aus der Sammelleitung 11 über die Leitung 10 und eine von dieser abzweigende Leitung 15 zu den Plasmabrennern 9 geleitet wird. Als Plasmagas kann jedoch auch über die Leitung 6 abgeführtes und gekühltes Abgas verwendet werden. Über eine Leitung 16 wird Sauerstoff zu den Plasmabrennern 9 geführt und über diese in den Einschmelzvergaser 3 eingebracht. Der Sauerstoff kann jedoch auch über von den Plasmabrennern 9 getrennte Düsen in den Einschmelzvergaser 3 eingeblasen werden. Über zwei Abstichleitungen 17 werden in gegebenen Zeitabständen die Eisenschmelze und die Schlacke abgezogen, die sich am Boden des Einschmelzvergasers 3 sammeln.

Über eine Leitung 18 wird von oben Kohle mit einer Körnung von vorzugsweise bis zu 50 mm in den Einschmelzvergaser 3 eingegeben. Die Kohle fällt schnell durch den freien oberen Teil des Vergasers, wobei sie getrocknet und entgast wird und dabei zerplatzt. Der so entstandene Koks fällt auf eine Koksschicht, die in fließbettähnlichem Zustand gehalten wird. Dieses Fließbett bzw. diese Wirbelschicht wird durch das hochströmende Plasmagas und den Sauerstoff sowie durch das bei der Fertigreduktion des Eisenschwamms entstehende CO aufrechterhalten. Das sich oberhalb des Fließbettes sammelnde Gas besteht im wesentlichen aus CO und $H_2$ und besitzt wine Temperatur von etwa 1000°C. Es wird über die Leitung 12 abgezogen.

Der Eisenschwamm wird im Wirkungsbereich der Plasmabrenner 9 geschmolzen und durch den dort befindlichen Koks vollständig reduziert. Das entstandene flüssige Eisen und auch die flüssige Schlacke tropfen herab und sammeln sich am Boden des Einschmelzvergasers 3. Eine für einen wirtschaftlichen Betrieb geeignete Wirbelschichthöhe leigt zwischen einem und fünf Metern.

Die über Leitung 18 eingegebene Kohle kann von beliebiger Qualität sein. Es kann beispielsweise eine preisgünstige Gasflammkohle folgender Zusammensetzung verwendet werden: 5% Feuchte, 35,7% flüchtige Bestandteile, 76,6% C, 5,3% H, 8,6% O, 1,6% N, 7,3% Asche; der Heizwert beträgt 30870 kJ/kg (alle Werte auf wasserfreien Zustand bezogen). Würde bei verwendung dieser Kohle keine zusätzliche Energie durch die Plasmabrenner 9 aufgebracht werden, dann müßte zum Betrieb des Einschmelzvergasers 3 der eingeführte Eisenschwamm auf einen Metallisierungsgrad von 90% vorreduziert werden. Außerdem wären der Kohle- und der Sauerstoffverbrauch sehr hoch. Weiterhin wäre eine Reduktion von Feinerz in der Wirbelschicht wegen der auftretenden Zusammenballungen nicht möglich.

Die Vorreduktion wird so eingestellt, daß der Metallisierungsgrad des in den Einschmelzvergaser 3 eingegebenen Eisenschwamms zwischen 30 und 70% liegt. Es ist insbesondere ein solcher Metallisierungsgrad empfehlenswert, bei dem das System energieautark ist. Das über die Leitung 6 abgeführte Abgas wird zumindest teilweise zur Stromerzeugung benutzt und eine Autarkie des Systems liegt vor, wenn die so gewonnene Strommenge ausreicht, den Stromverbrauch für die Plasmabrenner, die Sauerstofferzeugung und sonstige für das Verfahren eingesetzte Verbraucher zu decken. Dieser Zustand wird mit der genannten Gasflammkohle bei einem Metallisierungsgrad der Vorreduktion von 70% erreicht. Dabei werden mit 625 Kg Kohle und 305 m$^3$ Sauerstoff 1200 m$^3$ zur Vorreduktion verwendbares Gas im Einschmelzvergaser 3 erzeugt. Den mit einem Wirkungsgrad von 90% arbeitenden Plasmabrennern müßten 470 kWh/t zugeführt werden.

Bei einem Metallisierungsgrad der Vorreduktion von 50% wäre bei einem Kohleverbrauch von 460 Kg und einem Sauerstoffverbrauch von 244 m$^3$/t ein Fremdstrombedarf von 450 kWh/t erforderlich.

Bei dem vorliegenden Verfahren kann somit durch Wahl des bei der Vorreduktion erreichten Metallisierungsgrades ein optimales Verhältnis zwischen erzeugter Gasmenge, elektrischem Energieverbrauch sowie Kohle- und Sauerstoffverbrauch eingestellt werden. Hinsichtlich der Qualität der berwendeten Kohle ist es in keiner Weise beschränkt und das zu reduzierende Erz kann in Staubform vorliegen, wobei vorzugsweise auch mangan-, chrom- und nickelhaltige Erze eingesetzt werden können.

**Patentansprüche**

1. Verfahren zur Herstellung von Roheisen aus Feinerz, bei dem das Feinerz in einem oder mehreren Reduktionsaggregaten vorreduziert und der hierbei entstandene Eisenschwamm anschließend in einem Einschmelzvergaser mit Hilfe mindestens eines Plasmabrenners und eines festen kohlenstoffhaltigen Reduktionsmittels aufgeschmolzen und fertigreduziert wird, wobei der Eisenschwamm ausschließlich in den unteren Teil des Einschmelzvergasers im Bereich der Plasmabrenner oberhalf der Schmelz- und Schlackenwanne eingegeben wird, dadurch gekennzeichnet, daß ein festes kohlenstoffhaltiges Material ausschließlich von oben und in form von Kohle in den Einschmelzvergaser (3) eingeführt und in diesem ein Wirbelschicht aus der sich in Koks umwandelnden Kohle gebildet wird.

2. Verfahren nach Anspruch 1, dadurch gekennzeichnet, daß als festes kohlenstoffhaltiges Material Kohle mit einer Korngröße bis 50 mm verwendet wird.

3. Verfahren nach Anspruch 2, dadurch gekennzeichnet, daß als festes kohlenstoffhaltiges Material Gasflammkohle verwendet wird.

4. Verfahren nach einem der Ansprüche 1 bis 3, dadurch gekennzeichnet, daß die Wirbelschicht durch das hochströmende, über die Plasmabrenner (9) zugeführte Gas und das bei der Fertigreduktion entstehende Gas aufrechterhalten wird.

5. Verfahren nach einem der Ansprüche 1 bis 4, dadurch gekennzeichnet, daß eine Wirbelschichthöhe zwischen 1 und 5 m eingestellt wird.

6. Verfahren nach einem der Ansprüche 1 bis 5, dadurch gekennzeichnet, daß der Eisenschwamm über die Plasmabrenner (9) in den Einschmelzvergaser (3) eingegeben wird.

7. Verfahren nach einem der Ansprüche 1 bis 6, dadurch gekennzeichnet, daß Sauerstoff in den Einschmelzvergaser (3) eingeleitet wird.

8. Verfahren nach Anspruch 7, dadurch gekennzeichnet, daß die Einleitung des Sauerstoffs über die Plasmabrenner (9) erfolgt.

9. Verfahren nach einem der Ansprüche 1 bis 8, dadurch gekennzeichnet, daß das im Einschmelzvergaser (3) erzeugte Gas nach Einstellung auf eine geeignete Temperatur zur Vorreduktion des Eisenerzes verwendet wird.

10. Verfahren nach einem der Ansprüche 1 bis 9, dadurch gekennzeichnet, daß das im Einschmelzvergaser (3) erzeugte Gas nach Abkühlung zum Transport des Eisenschwamms in den Einschmelzvergaser (3) verwendet wird.

11. Verfahren nach einem der Ansprüche 1 bis 10, dadurch gekennzeichnet, daß das im Einschmelzvergaser (3) erzeugte Gas nach Abkühlung als Plasmagas für die Plasmabrenner (9) verwendet wird.

12. Verfahren nach einem der Ansprüche 1 bis 11, dadurch gekennzeichnet, daß das anfallende Abgas zur Erzeugung der für das Verfahren benötigten elektrischen Energie verwendet wird.

13. Verfahren nach einem der Ansprüche 1 bis 12, dadurch gekennzeichnet, daß das Einsenerz auf einen Metallisierungsgrad von 30 bis 70% vorreduziert wird, vorzugsweise auf 50% eingestellt wird.

14. Verfahren nach den Ansprüche 12 und 13, dadurch gekennzeichnet, daß der Metallisierungsgrad der Vorreduktion so gewählt wird, daß die aus dem Abgas gewonnene elektrische Energie den gesamten Bedarf des Verfahrens deckt.

15. Verfahren nach einem der Ansprüche 1 bis 14, dadurch gekennzeichnet, daß die Vorreduktion zweistufig durchgeführt wird.

16. Verfahren nach einem der Ansprüche 1 bis 15, dadurch gekennzeichnet, daß gekühltes Abgas als Plasmagas dür die Plasmabrenner (9) verwendet wird.

17. Verfahren nach einem der Ansprüche 1 bis 16, dadurch gekennzeichnet, daß das aus dem Einschmelzvergaser (3) herausgeführte Gas in einem Zyklon (4) entstaubt und der abgerschiedene Staub in den Einschmelzvergaser (3) zurückgeführt werden.

18. Verfahren nach Anspruch 17, dadurch gekennzeichnet, daß die Rückführung des Staubes über die Plasmabrenner (9) erfolgt.

19. Verfahren nach einem der Ansprüche 1 bis 18, dadurch gekennzeichnet, daß die Vorreduktion in zirkulierenden Wirbelschichten durchgeführt wird.

20. Verfahren nach Anspruch 19, dadurch gekennzeichnet, daß für den Anströmboden der Wirbelschichten keramische Kugeln verwendet werden.

21. Verfahren nach Anspruch 19 oder 20, dadurch gekennzeichnet, daß die Vorreduktion in Reduktionszyklonen durchgeführt wird.

22. Verfahren nach einem der Ansprüche 1 bis 21, dadurch gekennzeichnet, daß bei der Vorreduktion gleichzeitig eine Calzinierung etwaiger Zuschläge zum Feinerz erfolgt.

23. Verfahren nach einem der Ansprüche 1 bis 22, dadurch gekennzeichnet, daß das Feinerz in einer gesonderten Wirbelschichtstufe vorgewärmt und etwaige Zuschläge in dieser calziniert werden.

24. Verfahren nach einem der Ansprüche 1 bis 23, dadurch gekennzeichnet, daß als Geinerez chrom- und nickelhaltige Eisenerze verwendet werden.

25. Verfahren nach einem der Ansprüche 1 bis 23, dadurch gekennzeichnet, daß als Feinerz manganhaltiges Erz verwendet wird.

## Revendications

1. Procédé pour la fabrication de fonte à partir de minerai fin selon lequel ce minerai qui subit d'abord une pré-réduction dans un ou plusieurs groupes de réduction, l'éponge de fer qui est aussi produite étant ensuite fondue et complètement réduite dans un gazéificateur de fusion à l'aide d'au moins un brûleur à plasma et d'un produit réducteur solide contenant du carbone, l'éponge de fer étant exclusivement introduite dans la partie inférieure du gazéificateur de fusion, dans la zone du brûleur à plasma, au-dessus de la vanne d'écoulement du liquide de fusion et des scories, caractérisé en ce qu'une matière solide contenant du carbone est introduite exclusivement par le haut sous la forme de charbon dans le gazéificateur de fusion (3) et en ce qu'il se forme dans celui-ci une couche tourbillonnante à partir de ce charbon qui se transforme en coke.

2. Procédé selon la revendication 1, caractérisé en ce que l'on utilise comme matière solide renfermant du carbone, un charbon ayant une granulométrie pouvant atteindre 50 mm.

3. Procédé selon la revendication 1, caractérisé en ce que l'on utilise comme matière solide renfermant du carbone, un charbon flambant gazeux.

4. Procédé selon l'une quelconque des revendications 1 à 3, caractérisé en ce que la couche tourbillonnante est entretenue grâce aum gaz introduit par les brûleurs à plasma (9) et circulant vers le haut, et au gaz produit lors de la réduction complète.

5. Procédé selon l'une quelconque des revendications 1 à 4, caractérisé en ce que l'on règle la hauteur de la couche tourbillonnante à une valeur située entre 1 et 5 m.

6. Procédé selon l'une quelconque des revendications 1 à 5, caractérisé en ce que l'éponge de fer est introduite dans le gazéificateur de fusion (3) par les brûleurs à plasma (9).

7. Procédé selon l'une quelconque des revendications 1 à 6, caractérisé en ce que l'on introduit de l'oxygène dans le gazéificateur de fusion (3).

8. Procédé selon la revendicaiton 7, caractérisé en ce que l'oxygène est introduit par les brûleurs à plasma (9).

9. Procédé selon l'une quelconque des revendications 1 à 8, caractérisé en ce que l'on utilise le gaz obtenu dans le gazéificateur de fusion (3) après son réglage à une température appropriée pour la préréduction du minerai de fer.

10. Procédé selon l'une quelconque des revendications 1 à 9, caractérisé en ce que l'on utilise le gaz obtenu dans le gazéificateur de fusion (3) après refroidissement pour déplacer l'éponge de fer dans ce gazéificateur (3).

11. Procédé selon l'une quelconque des revendications 1 à 10, caractérisé en ce que l'on utilise le gaz obtenu dans le gazéificateur de fusion (3) après refroidissement comme gaz de plasma pour les brûleurs à plasma (9).

12. Procédé selon l'une quelconque des revendications 1 à 11, caractérisé en ce que le gaz d'échappement produit est utilisé pour en gendrer l'énergie électrique nécessaire à la mise en oeuvre dudit procédé.

13. Procédé selon l'une quelconque des revendications 1 à 12, caractérisé en ce que le minerai de fer subit une pré-réduction qui l'amène à un dégré de métallisation compris entre 30 et 70%, et de préférence réglé à 50%.

14. Procédé selon les revendications 12 et 13, caractérisé en ce que le degré de métallisation obtenu par la pré-réduction est choisi de telle manière que l'énergie électrique engendrée à partir du gaz d'échappement, couvre les besoins totaux du procédé.

15. Procédé selon l'une quelconque des revendications 1 à 14, caractérisé en ce que la pré-réduction est réalisée en deux étapes.

16. Procédé selon l'une quelconque des revendications 1 à 15, caractérisé en ce que du gaz d'échappement refroidi est utilisé comme gaz de plasma pour les brûleurs à plasma (9).

17. Procédé selon l'une quelconque des revendications 1 à 16, caractérisé en ce que le gaz évacué hors du gazéificateur de fusion (3) et dépoussiéré dans un cyclone, la poussière récupérée étant ramenée dans le gazéificateur de fusion (3).

18. Procédé selon la revendication 17, caractérisé en ce que le retour de la poussière est effectué par les brûleurs à plasma (9).

19. Procédé selon l'une quelconque des revendications 1 à 18, caractérisé en ce que la pré-réduction se fait dans des couches tourbillonnantes circulantes.

20. Procédé selon la revendication 19, caractérisé en ce que l'on utilise des boules en céramique pour constituer la sole de déplacement des couches tourbillonnantes.

21. Procédé selon l'une quelconque des revendications 19 ou 20, caractérisé en ce que caractérisé en ce que la pré-réduction est effectuée dans des cyclones de réduction.

22. Procédé selon l'une quelconque des revendications 1 à 21, caractérisé en ce qu'une calcination des additifs éventuels existant dans le minerai est effectuée simultanément avec la pré-réduction.

23. Procédé selon l'une quelconque des revendications 1 à 22, caractérisé en ce que le minerai fin est pré-chauffé dans un étape distinct de couche tourbillonnante et en ce que les additifs éventuels sont calcinés dans celui-ci.

24. Procédé selon l'une quelconque des revendications 1 à 23, caractérisé en ce que l'on utilise comme minerai fin du minerai de fer contenant du chrome et du nickel.

25. Procédé selon l'une quelconque des revendications 1 à 23, caractérisé en ce que l'on utilise comme minerai fin un minerai contenant du manganèse.

## Claims

1. Process for producing pig iron from finely divided ore wherein the fine ore is pre-reduced in one or several reduction units and the thus obtained sponge iron is subsequently molten in a melting-down vaporiser with the aid of at least one plasma torch and a solid carbon-containing reduction medium and given a final reduction whereby the sponge iron is exclusively supplied into the lower part of the melting-down vaporiser in the region of the plasma torches above the smelting- and slag basin, characterised in that a solid, carbon-containing material is introduced into the melting-down vaporiser (3) exclusively from the top and in the form of coal and that a fluid bath is made in said vaporiser of the coal which changes into coke.

2. Process according to claim 1, characterised in that the solid, carbon-containing material to be used is coal of a grain size of up to 50 mm.

3. Process according to claim 2, characterised in that the solid, carbon-containing material to be used is long-flame gas coal.

4. Process according to one of the claims 1 to 3, characterised in that the fluid bed is maintained by means of the upward streaming gas supplied via the plasma torches (9), and by the gas created in the course of the final reduction.

5. Process according to one of the claims 1 to 4, characterised in that the fluid-bed height is set between 1 and 5 m.

6. Process according to one of the claims 1 to 5, characterised in that the sponge iron is introduced into the melting-down vaporiser (3) through the plasma torches (9).

7. Process according to one of the claims 1 to 6, characterised in that oxygen is introduced into the melting-down vaporiser (3).

8. Process according to claim 7, characterised in that the introduction of the oxygen takes place through the plasma torches (9).

9. Process according to one of the claims 1 to 8, characterised in that the gas created in the melting-down vaporiser (3) is used, after adjustment to a suitable temperature, for the pre-reduction of the iron ore.

10. Process according to one of the claims 1 to 9, characterised in that the gas created in the melting-down vaporiser (3) is used, after cooling, for the transport of the sponge iron into the melting-down vaporiser (3).

11. Process according to one of the claims 1 to 10, characterised in that the gas created in the melting-down vaporiser (3) is used, after cooling, as plasma gas for the plasma torches (9).

12. Process according to one of the claims 1 to 11, characterised in that the developing waste gas is used for the production of the electrical energy required for the process.

13. Process according to one of the claims 1 to 12, characterised in that the iron ore is pre-reduced to a metalisation degree of 30 to 70%, preferably to be set at 50%.

14. Process according to the claims 12 and 13, characterised in that the metalisation degree of the pre-reduction is chosen such that the electrical energy obtained from the waste gas meets the entire requirements of the process.

15. Process according to one of the claims 1 to 14, characterised in that the pre-reduction is done in two stages.

16. Process according to one of the claims 1 to 15, characterised in that the cooled waste gas is used as plasma gas for the plasma torches (9).

17. Process according to one of the claims 1 to 16, characterised in that the gas removed from the melting-down vaporisor (3) is dusted in a cyclone (4), and the separated dust is fed back into the melting-down vaporiser (3).

18. Process according to claim 17, characterised in that the feedback of the dust is through the plasma torches (9).

19. Process according to one of the claims 1 to 18, characterised in that the pre-reduction is done in ciculating fluid beds.

20. Process according to claim 19, characterised in that ceramic balls are used for the air-flow base of the fluid beds.

21. Process according to claim 19 or 20, characterised in that the pre-reduction is performed in reduction cycles.

22. Process according to one of the claims 1 to 21, characterised in that a calcination of possible aggregates to the fine ore is effected simultaneously with the pre-reduction.

23. Process according to one of the claims 1 to 22, characterised in that the fine ore is pre-heated in a special fluid-bed stage and possible aggregates are calcinated therein.

24. Process according to one of the claims 1 to 23, characterised in that the fine ore is chromium- and nickel-containing iron ore.

25. Process according to one of the claims 1 to 23, characterised in that the fine ore is manganese-containing ore.